# EUROPEAN PATENT SPECIFICATION

(11) **EP 3 205 074 B1**
(45) Date of publication and mention of the grant of the patent: **24.10.2018**
(21) Application number: 15775870.7
(22) Date of filing: 22.09.2015
(51) Int. Cl.: H04L 29/08

(54) **LEVERAGING PEER-TO-PEER DISCOVERY MESSAGES FOR GROUP ACTIVITY NOTIFICATION**
EINSATZ VON PEER-TO-PEER DISCOVERY-BOTSCHAFTEN ZUR NOTIFIZIERUNG VON GRUPPENAKTIVITÄT
EXPLOITATION DE MESSAGES DE DÉCOUVERTE PEER-TO-PEER POUR NOTIFIER DES ACTIVITÉS DE GROUPE

(30) Priority: 10.10.2014 US 201414511325
(43) Date of publication of application: 16.08.2017
(73) Proprietor: Qualcomm Incorporated, San Diego, CA 92121-1714 (US)
(72) Inventor: SURYAVANSHI, Vijay Anandrao, San Diego, California 92121-1714 (US)
(74) Representative: Tomkins & Co
(86) International application number: PCT/US2015/051526
(87) International publication number: WO 2016/057214

(56) References cited:
- WO-A1-2014/017959
- US-A1- 2003 135 552

## Description

### BACKGROUND

### 1. Field of the Disclosure

The disclosure is related to leveraging peer-to-peer (P2P) discovery messages for group activity notification.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long-Term Evolution (LTE) or WiMax). There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Time Division Multiple Access (TDMA), the Global System for Mobile access (GSM) variation of TDMA, etc.

More recently, LTE has been developed as a wireless communications protocol for wireless communication of high-speed data for mobile phones and other data terminals. LTE is based on GSM, and includes contributions from various GSM-related protocols such as Enhanced Data rates for GSM Evolution (EDGE), and Universal Mobile Telecommunications System (UMTS) protocols such as High-Speed Packet Access (HSPA).

LTE Direct (LTE-D) is a proposed 3GPP (Release 12) device-to-device (D2D) solution for proximate discovery. LTE-D dispenses with location tracking and network calls by directly monitoring for services on other LTE-D devices within a large range (∼500m, line of sight). It does so continuously in a synchronous system that is battery efficient, and can concurrently detect thousands of services in proximity.

LTE-D operates on licensed spectrum as a service to mobile applications. LTE-D is a D2D solution that enables service layer discovery. Mobile applications on LTE-D devices can instruct LTE-D to monitor for mobile application services on other devices and announce their own services (for detection by services on other LTE-D devices) at the physical layer. This allows the applications to be closed while LTE-D does the work - continuously - and notify the client application when it detects a match to the monitor it set.

LTE-D is thus an attractive alternative to mobile developers seeking to deploy proximate discovery solutions as extensions of their existing cloud services. LTE-D is a distributed discovery solution (versus the centralized discovery that exists today), whereby mobile applications forego centralized database processing in identifying relevancy matches, instead autonomously determining relevance at the device level by transmitting and monitoring for relevant attributes. LTE-D offers certain benefits in terms of privacy as well as power consumption, in that LTE-D does not utilize perpetual location tracking to determine proximity. By keeping discovery on the device rather than in the cloud, the user has more control of what information is shared with external devices.

WO2014017959 relates to group session management in a P2P network, wherein a discovery message may comprise a session identifier.

US2003135552 relates to identifying participants of a group session within a larger electronic network, which involves broadcasting a message including a session identifier.

### SUMMARY

The disclosure is related to leveraging peer-to-peer (P2P) discovery messages. In an aspect, a method for leveraging P2P discovery messages includes generating, by a user device that is a member of a P2P communications group, a P2P discovery message, the P2P discovery message indicating an activity state of a group communication session among members of the P2P communications group, and transmitting, by the user device, the P2P discovery message to one or more other user devices that are members of the P2P communications group.

In an aspect, a method for leveraging P2P discovery messages includes receiving, by a user device that is a member of a P2P communications group, a P2P discovery message indicating an activity state of a group communication session among members of the P2P communications group and determining, by the user device, whether or not to join the group communication session based on the activity state of the group communication session.

In an aspect, a user device for leveraging P2P discovery messages includes a processor configured to generate a P2P discovery message, the P2P discovery message indicating an activity state of a group communication session among members of a P2P communications group, wherein the user device is a member of the P2P communications group, and a transceiver configured to transmit the P2P discovery message to one or more other user devices that are members of the P2P communications group.

In an aspect, a user device for leveraging P2P discovery messages includes a transceiver configured to receive a P2P discovery message indicating an activity state of a group communication session among members of a P2P communications group, wherein the user device is a member of the P2P communications group, and a processor configured to determine whether or not to join the group communication session based on the activity state of the group communication session.

In an aspect, an apparatus for leveraging P2P discovery messages includes means for generating, by a user device that is a member of a P2P communications group, a P2P discovery message, the P2P discovery message indicating an activity state of a group communication session among members of the P2P communications group, and means for transmitting, by the user device, the P2P discovery message to one or more other user devices that are members of the P2P communications group.

In an aspect, an apparatus for leveraging P2P discovery messages includes means for receiving, by a user device that is a member of a P2P communications group, a P2P discovery message indicating an activity state of a group communication session among members of the P2P communications group, and means for determining, by the user device, whether or not to join the group communication session based on the activity state of the group communication session.

In an aspect, an apparatus for leveraging P2P discovery messages includes logic configured to generate, by a user device that is a member of a P2P communications group, a P2P discovery message, the P2P discovery message indicating an activity state of a group communication session among members of the P2P communications group, and logic configured to transmit, by the user device, the P2P discovery message to one or more other user devices that are members of the P2P communications group.

In an aspect, an apparatus for leveraging P2P discovery messages includes logic configured to receive, by a user device that is a member of a P2P communications group, a P2P discovery message indicating an activity state of a group communication session among members of the P2P communications group, and logic configured to determine, by the user device, whether or not to join the group communication session based on the activity state of the group communication session.

In an aspect, a non-transitory computer-readable medium for leveraging P2P discovery messages includes at least one instruction to generate, by a user device that is a member of a P2P communications group, a P2P discovery message, the P2P discovery message indicating an activity state of a group communication session among members of the P2P communications group, and at least one instruction to transmit, by the user device, the P2P discovery message to one or more other user devices that are members of the P2P communications group.

In an aspect, a non-transitory computer-readable medium for leveraging P2P discovery messages includes at least one instruction to receive, by a user device that is a member of a P2P communications group, a P2P discovery message indicating an activity state of a group communication session among members of the P2P communications group, and at least one instruction to determine, by the user device, whether or not to join the group communication session based on the activity state of the group communication session.

### BRIEF DESCRIPTION OF THE DRAWINGS

A more complete appreciation of embodiments of the disclosure and many of the attendant advantages thereof will be readily obtained as the same becomes better understood by reference to the following detailed description when considered in connection with the accompanying drawings which are presented solely for illustration and not limitation of the disclosure, and in which:
FIG. 1 illustrates a high-level system architecture of a wireless communications system in accordance with an aspect of the disclosure.
FIG. 2 illustrates examples of user equipments (UEs) in accordance with an aspect of the disclosure.
FIG. 3 illustrates a communication device that includes logic configured to perform functionality in accordance with an aspect of the disclosure.
FIG. 4 illustrates a server in accordance with an aspect of the disclosure.
FIG. 5 illustrates an example of the application server conveying group session related information to a plurality of UEs.
FIG. 6 illustrates an example of an intermediate processing entity conveying group information for a group media session.
FIG. 7 illustrates another example of an intermediate processing entity conveying group information for a group media session.
FIG. 8 illustrates a wireless communications system in which UEs can connect directly to other UEs using device-to-device (D2D) peer-to-peer (P2P) technology while also connecting to a Wireless Wide Area Network (WWAN).
FIG. 9 illustrates an example in which LTE-D capable devices transmit periodic LTE-D discovery messages to an LTE-D capable device.
FIG. 10A illustrates an individual P2P discovery message (I_P2PDM) for Long Term Evolution Direct (LTE-D) according to an aspect of the disclosure.
FIG. 10B illustrates an I_P2PDM for LTE-D in accordance with an aspect of the disclosure.
FIG. 11 illustrates an exemplary communications group of LTE-D capable UEs transmitting discovery messages according to an aspect of the disclosure.
FIG. 12 illustrates an exemplary I_P2PDM 1200 for LTE-D in accordance with an aspect of the disclosure.
FIG. 13 illustrates an exemplary flow for leveraging P2P discovery messages according to an aspect of the disclosure.
FIG. 14 illustrates an exemplary flow for leveraging P2P discovery messages according to an aspect of the disclosure.
FIGS. 15 and 16 are other simplified block diagrams of several sample aspects of apparatuses configured to support communication as taught herein.

### DETAILED DESCRIPTION

The disclosure relates to leveraging peer-to-peer (P2P) discovery messages. In an aspect, a user device that is a member of a P2P communications group generates a P2P discovery message indicating an activity state of a group communication session among members of the P2P communications group and transmits the P2P discovery message to one or more other user devices that are members of the P2P communications group. In another aspect, a user device that is a member of a P2P communications group receives a P2P discovery message indicating an activity state of a group communication session among members of the P2P communications group and determines whether or not to join the group communication session based on the activity state of the group communication session.

Aspects of the disclosure are disclosed in the following description and related drawings directed to specific embodiments of the disclosure. Alternate embodiments may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the disclosure" does not require that all embodiments of the disclosure include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A client device, referred to herein as a user equipment (UE), may be mobile or stationary, and may communicate with a radio access network (RAN). As used herein, the term "UE" may be referred to interchangeably as an "access terminal" or "AT", a "wireless device", a "subscriber device", a "subscriber terminal", a "subscriber station", a "user terminal" or UT, a "mobile terminal", a "mobile station" and variations thereof. Generally, UEs can communicate with a core network via the RAN, and through the core network the UEs can be connected with external networks such as the Internet. Of course, other mechanisms of connecting to the core network and/or the Internet are also possible for the UEs, such as over wired access networks, WiFi networks (e.g., based on IEEE 802.11, etc.) and so on. UEs can be embodied by any of a number of types of devices including but not limited to PC cards, compact flash devices, external or internal modems, wireless or wireline phones, and so on. A communication link through which UEs can send signals to the RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

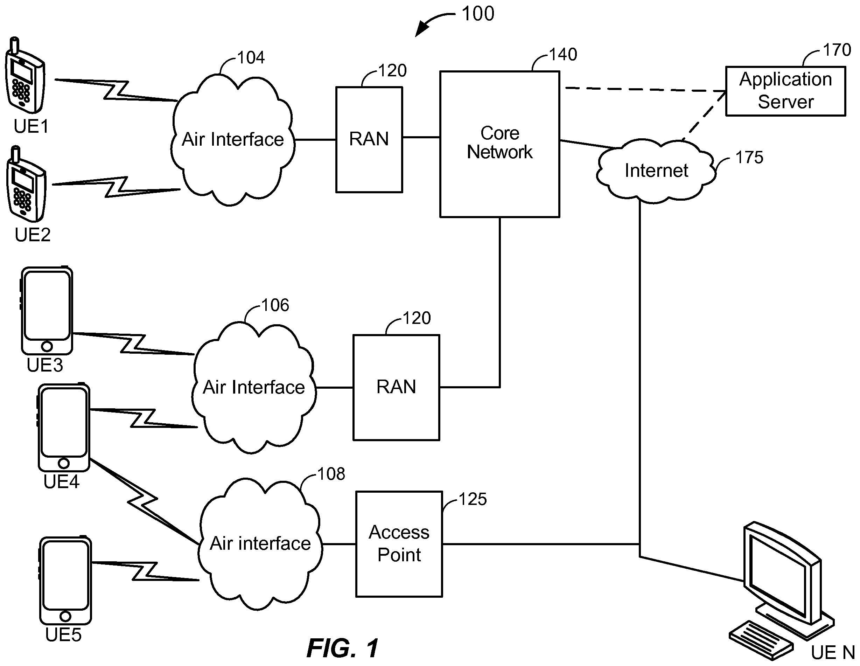

FIG. 1 illustrates a high-level system architecture of a wireless communications system 100 in accordance with an embodiment of the disclosure. The wireless communications system 100 contains UEs 1...N. The UEs 1...N can include cellular telephones, personal digital assistant (PDAs), pagers, a laptop computer, a desktop computer, and so on. For example, in FIG. 1, UEs 1...2 are illustrated as cellular calling phones, UEs 3...5 are illustrated as cellular touchscreen phones or smart phones, and UE N is illustrated as a desktop computer or PC.

Referring to FIG. 1, UEs 1...N are configured to communicate with an access network (e.g., the RAN 120, an access point 125, etc.) over a physical communications interface or layer, shown in FIG. 1 as air interfaces 104, 106, 108 and/or a direct wired connection. The air interfaces 104 and 106 can comply with a given cellular communications protocol (e.g., CDMA, EVDO, eHRPD, GSM, EDGE, W-CDMA, LTE, etc.), while the air interface 108 can comply with a wireless IP protocol (e.g., IEEE 802.11). The RAN 120 includes a plurality of access points that serve UEs over air interfaces, such as the air interfaces 104 and 106. The access points in the RAN 120 can be referred to as access nodes or ANs, access points or APs, base stations or BSs, Node Bs, eNode Bs, and so on. These access points can be terrestrial access points (or ground stations), or satellite access points. The RAN 120 is configured to connect to a core network 140 that can perform a variety of functions, including bridging circuit switched (CS) calls between UEs served by the RAN 120 and other UEs served by the RAN 120 or a different RAN altogether, and can also mediate an exchange of packet-switched (PS) data with external networks such as Internet 175. The Internet 175 includes a number of routing agents and processing agents (not shown in FIG. 1 for the sake of convenience). In FIG. 1, UE N is shown as connecting to the Internet 175 directly (i.e., separate from the core network 140, such as over an Ethernet connection of WiFi or 802.11-based network). The Internet 175 can thereby function to bridge packet-switched data communications between UE N and UEs 1...N via the core network 140. Also shown in FIG. 1 is the access point 125 that is separate from the RAN 120. The access point 125 may be connected to the Internet 175 independent of the core network 140 (e.g., via an optical communication system such as FiOS, a cable modem, etc.). The air interface 108 may serve UE 4 or UE 5 over a local wireless connection, such as IEEE 802.11 in an example. UE N is shown as a desktop computer with a wired connection to the Internet 175, such as a direct connection to a modem or router, which can correspond to the access point 125 itself in an example (e.g., for a WiFi router with both wired and wireless connectivity).

Referring to FIG. 1, an application server 170 is shown as connected to the Internet 175, the core network 140, or both. The application server 170 can be implemented as a plurality of structurally separate servers, or alternately may correspond to a single server. As will be described below in more detail, the application server 170 is configured to support one or more communication services (e.g., Voice-over-Internet Protocol (VoIP) sessions, Push-to-Talk (PTT) sessions, group communication sessions, social networking services, etc.) for UEs that can connect to the application server 170 via the core network 140 and/or the Internet 175, and/or to provide content (e.g., web page downloads) to the UEs.

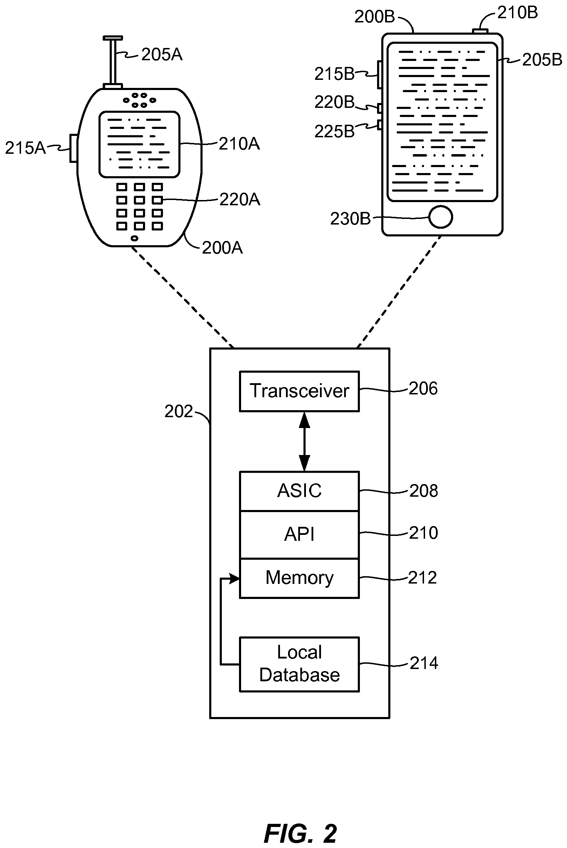

FIG. 2 illustrates examples of UEs (i.e., client devices) in accordance with embodiments of the disclosure. Referring to FIG. 2, UE 200A is illustrated as a calling telephone and UE 200B is illustrated as a touchscreen device (e.g., a smart phone, a tablet computer, etc.). As shown in FIG. 2, an external casing of UE 200A is configured with an antenna 205A, display 210A, at least one button 215A (e.g., a PTT button, a power button, a volume control button, etc.) and a keypad 220A among other components, as is known in the art. Also, an external casing of UE 200B is configured with a touchscreen display 205B, peripheral buttons 210B, 215B, 220B and 225B (e.g., a power control button, a volume or vibrate control button, an airplane mode toggle button, etc.), at least one front-panel button 230B (e.g., a Home button, etc.), among other components, as is known in the art. While not shown explicitly as part of UE 200B, the UE 200B can include one or more external antennas and/or one or more integrated antennas that are built into the external casing of UE 200B, including but not limited to WiFi antennas, cellular antennas, satellite position system (SPS) antennas (e.g., global positioning system (GPS) antennas), and so on.

While internal components of UEs such as the UEs 200A and 200B can be embodied with different hardware configurations, a basic high-level UE configuration for internal hardware components is shown as platform 202 in FIG. 2. The platform 202 can receive and execute software applications, data and/or commands transmitted from the RAN 120 that may ultimately come from the core network 140, the Internet 175 and/or other remote servers and networks (e.g., application server 170, web URLs, etc.). The platform 202 can also independently execute locally stored applications without RAN interaction. The platform 202 can include a transceiver 206 operably coupled to an application specific integrated circuit (ASIC) 208, or other processor, microprocessor, logic circuit, or other data processing device. The ASIC 208 or other processor executes the application programming interface (API) 210 layer that interfaces with any resident programs in the memory 212 of the wireless device. The memory 212 can be comprised of read-only or random-access memory (RAM and ROM), EEPROM, flash cards, or any memory common to computer platforms. The platform 202 also can include a local database 214 that can store applications not actively used in memory 212, as well as other data. The local database 214 is typically a flash memory cell, but can be any secondary storage device as known in the art, such as magnetic media, EEPROM, optical media, tape, soft or hard disk, or the like.

Accordingly, an embodiment of the disclosure can include a UE (e.g., UE 200A, 200B, etc.) including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UEs 200A and 200B in FIG. 2 are to be considered merely illustrative and the disclosure is not limited to the illustrated features or arrangement.

For example, where UE 200A/200B is a member of a P2P communications group and is configured to leverage P2P discovery messages, the ASIC 208 may be configured to generate a P2P discovery message indicating an activity state of a group communication session among members of the P2P communications group, and the transceiver 206 may be configured to transmit the P2P discovery message to one or more other user devices that are members of the P2P communications group. In another example, where UE 200A/200B is a member of a P2P communications group and is configured to leverage P2P discovery messages, the transceiver 206 may be configured to receive a P2P discovery message indicating an activity state of a group communication session among members of the P2P communications group, and the ASIC 208 may be configured to determine whether or not to join the group communication session based on the activity state of the group communication session.

The wireless communication between the UEs 200A and/or 200B and the RAN 120 can be based on different technologies, such as CDMA, W-CDMA, time division multiple access (TDMA), frequency division multiple access (FDMA), Orthogonal Frequency Division Multiplexing (OFDM), GSM, or other protocols that may be used in a wireless communications network or a data communications network. As discussed in the foregoing and known in the art, voice transmission and/or data can be transmitted to the UEs from the RAN using a variety of networks and configurations. Accordingly, the illustrations provided herein are not intended to limit the embodiments of the disclosure and are merely to aid in the description of aspects of embodiments of the disclosure.

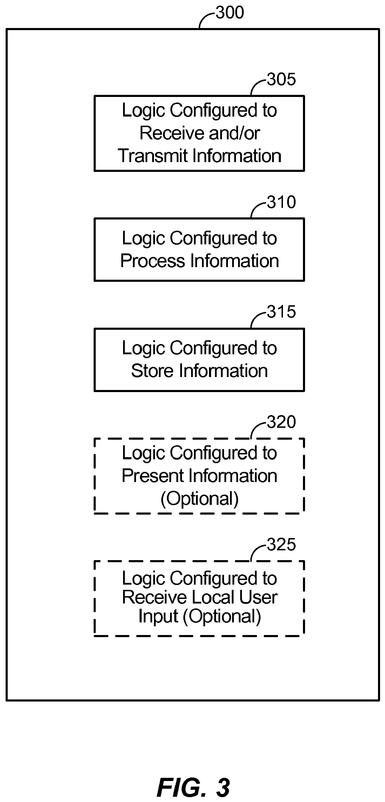

FIG. 3 illustrates a communication device 300 that includes logic configured to perform functionality. The communication device 300 can correspond to any of the above-noted communication devices, including but not limited to UEs 200A or 200B, any component of the RAN 120, any component of the core network 140, any components coupled with the core network 140 and/or the Internet 175 (e.g., the application server 170), and so on. Thus, communication device 300 can correspond to any electronic device that is configured to communicate with (or facilitate communication with) one or more other entities over the wireless communications system 100 of FIG. 1.

Referring to FIG. 3, the communication device 300 includes logic configured to receive and/or transmit information 305. In an example, if the communication device 300 corresponds to a wireless communications device (e.g., UE 200A or 200B, AP 125, a BS, Node B or eNodeB in the RAN 120, etc.), the logic configured to receive and/or transmit information 305 can include a wireless communications interface (e.g., Bluetooth, WiFi, 2G, CDMA, W-CDMA, 3G, 4G, LTE, etc.) such as a wireless transceiver and associated hardware (e.g., an RF antenna, a MODEM, a modulator and/or demodulator, etc.). Such a wireless transceiver and associated hardware may be configured to transmit a P2P discovery message, the P2P discovery message indicating an activity state of a group communication session among members of a P2P communications group, to one or more user devices that are members of the P2P communications group. As another example, such a wireless transceiver and associated hardware may be configured to receive a P2P discovery message indicating an activity state of a group communication session among members of the P2P communications group. In another example, the logic configured to receive and/or transmit information 305 can correspond to a wired communications interface (e.g., a serial connection, a USB or Firewire connection, an Ethernet connection through which the Internet 175 can be accessed, etc.). Thus, if the communication device 300 corresponds to some type of network-based server (e.g., application server 170, etc.), the logic configured to receive and/or transmit information 305 can correspond to an Ethernet card, in an example, that connects the network-based server to other communication entities via an Ethernet protocol. In a further example, the logic configured to receive and/or transmit information 305 can include sensory or measurement hardware by which the communication device 300 can monitor its local environment (e.g., an accelerometer, a temperature sensor, a light sensor, an antenna for monitoring local RF signals, etc.). The logic configured to receive and/or transmit information 305 can also include software that, when executed, permits the associated hardware of the logic configured to receive and/or transmit information 305 to perform its reception and/or transmission function(s). However, the logic configured to receive and/or transmit information 305 does not correspond to software alone, and the logic configured to receive and/or transmit information 305 relies at least in part upon hardware to achieve its functionality.

Referring to FIG. 3, the communication device 300 further includes logic configured to process information 310. In an example, the logic configured to process information 310 can include at least a processor. Example implementations of the type of processing that can be performed by the logic configured to process information 310 includes but is not limited to performing determinations, establishing connections, making selections between different information options, performing evaluations related to data, interacting with sensors coupled to the communication device 300 to perform measurement operations, converting information from one format to another (e.g., between different protocols such as .wmv to .avi, etc.), and so on. For example, where the communication device 300 corresponds to a user device that is a member of a P2P communications group, the logic configured to process information 310 may include logic configured to generate a P2P discovery message indicating an activity state of a group communication session among members of the P2P communications group. As another example, where the communication device 300 corresponds to a user device that is a member of a P2P communications group, the logic configured to process information 310 may include logic configured to determine whether or not to join the group communication session based on an activity state of the group communication session, wherein a received P2P discovery message indicates the activity state of a group communication session among members of the P2P communications group. The processor included in the logic configured to process information 310 can correspond to a general purpose processor, a digital signal processor (DSP), an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 310 can also include software that, when executed, permits the associated hardware of the logic configured to process information 310 to perform its processing function(s). However, the logic configured to process information 310 does not correspond to software alone, and the logic configured to process information 310 relies at least in part upon hardware to achieve its functionality.

Referring to FIG. 3, the communication device 300 further includes logic configured to store information 315. In an example, the logic configured to store information 315 can include at least a non-transitory memory and associated hardware (e.g., a memory controller, etc.). For example, the non-transitory memory included in the logic configured to store information 315 can correspond to RAM memory, flash memory, ROM memory, EPROM memory, EEPROM memory, registers, hard disk, a removable disk, a CD-ROM, or any other form of storage medium known in the art. The logic configured to store information 315 can also include software that, when executed, permits the associated hardware of the logic configured to store information 315 to perform its storage function(s). However, the logic configured to store information 315 does not correspond to software alone, and the logic configured to store information 315 relies at least in part upon hardware to achieve its functionality.

Referring to FIG. 3, the communication device 300 further optionally includes logic configured to present information 320. In an example, the logic configured to present information 320 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 300. For example, if the communication device 300 corresponds to UE 200A or UE 200B as shown in FIG. 2, the logic configured to present information 320 can include the display 210A of UE 200A or the touchscreen display 205B of UE 200B. In a further example, the logic configured to present information 320 can be omitted for certain communication devices, such as network communication devices that do not have a local user (e.g., network switches or routers, remote servers such as the application server 170, etc.). The logic configured to present information 320 can also include software that, when executed, permits the associated hardware of the logic configured to present information 320 to perform its presentation function(s). However, the logic configured to present information 320 does not correspond to software alone, and the logic configured to present information 320 relies at least in part upon hardware to achieve its functionality.

Referring to FIG. 3, the communication device 300 further optionally includes logic configured to receive local user input 325. In an example, the logic configured to receive local user input 325 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 300. For example, if the communication device 300 corresponds to UE 200A or UE 200B as shown in FIG. 2, the logic configured to receive local user input 325 can include the keypad 220A, any of the buttons 215A or 210B through 225B, the touchscreen display 205B, etc. In a further example, the logic configured to receive local user input 325 can be omitted for certain communication devices, such as network communication devices that do not have a local user (e.g., network switches or routers, remote servers such as the application server 170, etc.). The logic configured to receive local user input 325 can also include software that, when executed, permits the associated hardware of the logic configured to receive local user input 325 to perform its input reception function(s). However, the logic configured to receive local user input 325 does not correspond to software alone, and the logic configured to receive local user input 325 relies at least in part upon hardware to achieve its functionality.

Referring to FIG. 3, while the configured logics of 305 through 325 are shown as separate or distinct blocks in FIG. 3, it will be appreciated that the hardware and/or software by which the respective configured logic performs its functionality can overlap in part. For example, any software used to facilitate the functionality of the configured logics of 305 through 325 can be stored in the non-transitory memory associated with the logic configured to store information 315, such that the configured logics of 305 through 325 each performs their functionality (i.e., in this case, software execution) based in part upon the operation of software stored by the logic configured to store information 315. Likewise, hardware that is directly associated with one of the configured logics can be borrowed or used by other configured logics from time to time. For example, the processor of the logic configured to process information 310 can format data into an appropriate format before being transmitted by the logic configured to receive and/or transmit information 305, such that the logic configured to receive and/or transmit information 305 performs its functionality (i.e., in this case, transmission of data) based in part upon the operation of hardware (i.e., the processor) associated with the logic configured to process information 310.

Generally, unless stated otherwise explicitly, the phrase "logic configured to" as used throughout this disclosure is intended to invoke an embodiment that is at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the embodiments described below in more detail.

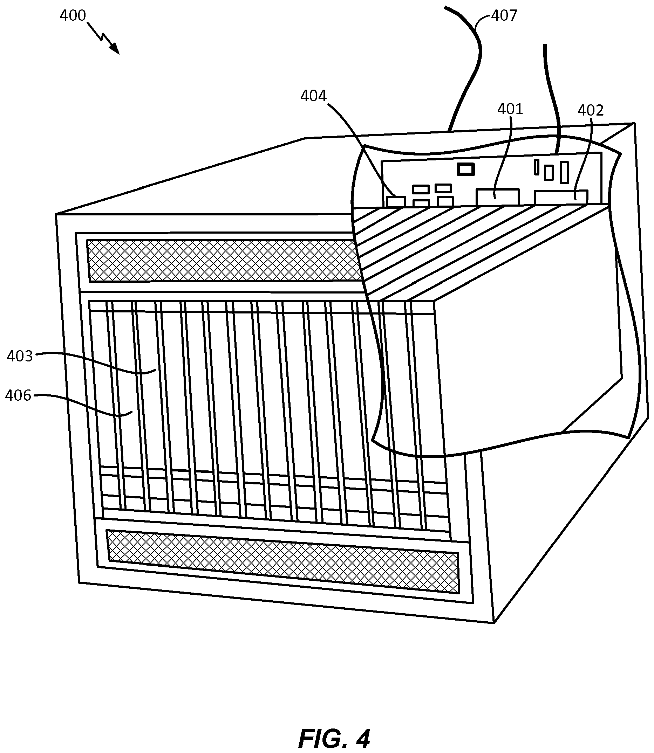

The various embodiments may be implemented on any of a variety of commercially available server devices, such as server 400 illustrated in FIG. 4. In an example, the server 400 may correspond to one example configuration of the application server 170 described above. In FIG. 4, the server 400 includes a processor 401 coupled to volatile memory 402 and a large capacity nonvolatile memory, such as a disk drive 403. The server 400 may also include a floppy disc drive, compact disc (CD) or DVD disc drive 406 coupled to the processor 401. The server 400 may also include network access ports 404 coupled to the processor 401 for establishing data connections with a network 407, such as a local area network coupled to other broadcast system computers and servers or to the Internet. In context with FIG. 3, it will be appreciated that the server 400 of FIG. 4 illustrates one example implementation of the communication device 300, whereby the logic configured to transmit and/or receive information 305 corresponds to the network access ports 304 used by the server 400 to communicate with the network 407, the logic configured to process information 310 corresponds to the processor 401, and the logic configuration to store information 315 corresponds to any combination of the volatile memory 402, the disk drive 403 and/or the disc drive 406. The optional logic configured to present information 320 and the optional logic configured to receive local user input 325 are not shown explicitly in FIG. 4 and may or may not be included therein. Thus, FIG. 4 helps to demonstrate that the communication device 300 may be implemented as a server, in addition to a UE implementation as in 205A or 205B as in FIG. 2.

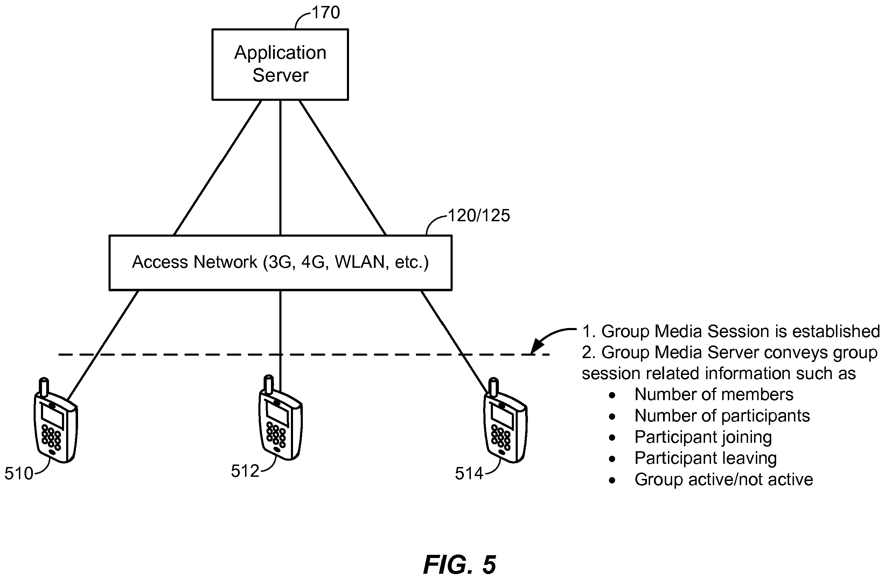

Conveying group information in a group media session typically involves intermediate processing entities. For example, Open Mobile Alliance (OMA) push-to-talk (PTT) over cellular (PoC) leverages the Internet Protocol (IP) Multimedia Subsystem (IMS) infrastructure to deliver group activity via participant information as supported by Request for Comments (RFC) 4575 - A Session Initiation Protocol (SIP) Event Package for Conference State. FIG. 5 illustrates an example of the application server 170 conveying group session related information to a plurality of UEs 510, 512, 514 via a RAN, such as RAN 120 in FIG. 1, or an access point, such as access point 125 in FIG. 1. Each of UEs 510, 512, 514 may correspond to one of UEs 200A or 200B in FIG. 2.

As illustrated in FIG. 5, once a group media session is established (step 1), the application server 170 conveys group session related information, such as the number of members, the number of participants, whether a participant is joining or leaving, and whether the group is active or not active (step 2). Group activity in the media session (which may be a PTT group call, a video conference call, etc.) may be conveyed via various standard and proprietary methods.

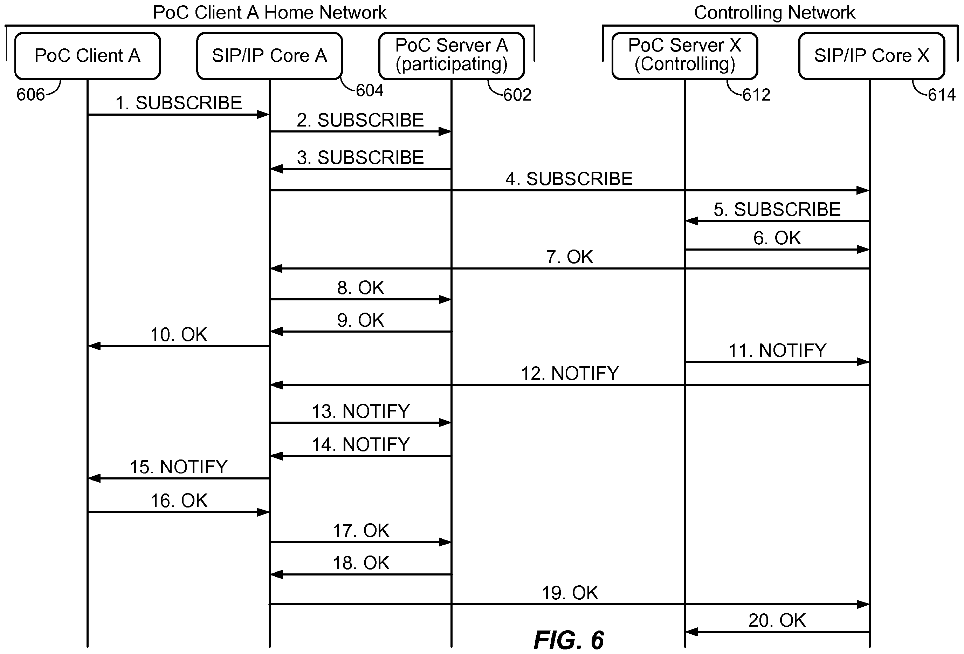

FIG. 6 illustrates another example of an intermediate processing entity conveying group information for a group media session. In the example of FIG. 6, the participant information is IMS-based and OMA PoC-defined. In FIG. 6, a PoC client A 606 sends a SUBSCRIBE message to the SIP/IP core A 604 (step 1). At step 2, the SIP/IP core A 604 forwards the SUBSCRIBE message to the PoC server A 602, and at step 3, the PoC server A 602 responds to the SIP/IP core A 604 with a SUBSCRIBE message. The SIP/IP core A 604 sends the SUBSCRIBE message to the SIP/IP core X 614 at step 4. At steps 5 and 6, the SIP/IP core X 614 sends the SUBSCRIBE message to the PoC server X 612, which responds to the SIP/IP core X 614 with an acknowledgement (OK). The SIP/IP core X 614 then sends an acknowledgement (OK) to the SIP/IP core A 604 (step 7). At steps 8 and 9, the SIP/IP core A 604 and the PoC server A 602 exchange OK messages, and at step 10, the SIP/IP core A 604 sends an OK message to the PoC client A 606.

At steps 11 and 12, the PoC server X 612 sends a group information notification to the SIP/IP core X 614, which forwards the notification to the SIP/IP core A 604. At steps 13 and 14, the SIP/IP core A 604 sends the notification to the PoC server A 602, which responds with a notification for PoC client A 606. The SIP/IP core A 604 sends the notification to the PoC client A 606 at step 15, and at step 16, the PoC client A 606 responds with an acknowledgement (OK). At steps 17 and 18, the SIP/IP core A 604 and the PoC server A 602 exchange acknowledgements. At step 19, the SIP/IP core A 604 sends an acknowledgement to the SIP/IP core X 614, which sends the acknowledgement to the PoC server X 612 at step 20.

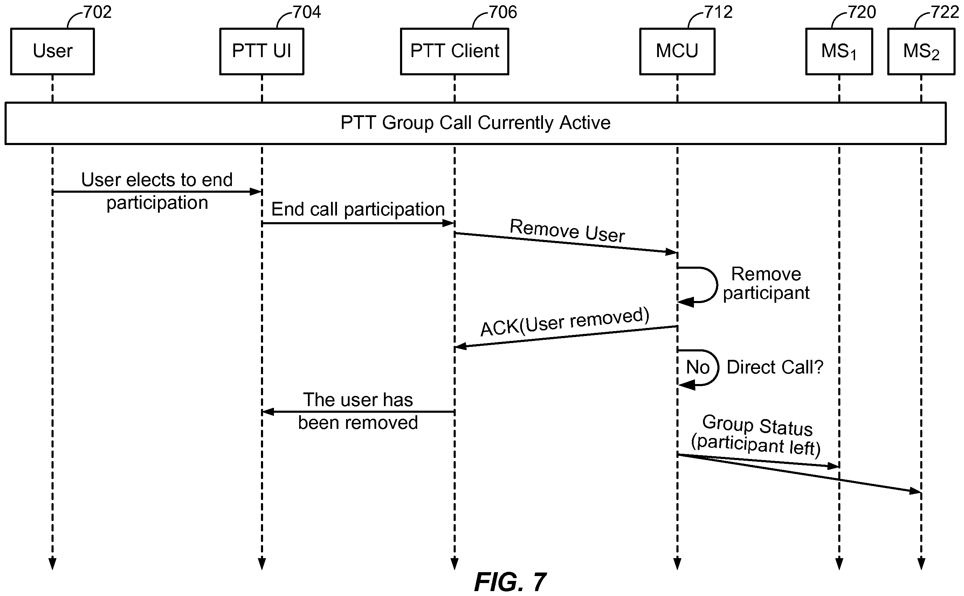

FIG. 7 illustrates another example of an intermediate processing entity conveying group information for a group media session. FIG. 7 illustrates the transmission of group in-call status information for a VoIP group PTT application (such as QChat from Qualcomm®). In FIG. 7, a user 702 elects to end participation in a currently active PTT group call. The PTT UI 704 receives the indication and directs the PTT client 706 to end call participation. In response, the PTT client 706 notifies the Media Control Unit (MCU) 712, which controls the media and media signaling aspects of the group session, to remove the user. The MCU 712 removes the participant and sends an acknowledgement to the PTT client 706. The PTT client 706 notifies the PTT UI 704 that the user has been removed. After removing the user, the MCU 712 determines whether the PTT group call was a direct call. If it was not, the MCU 712 notifies the other participants 722 (mobile station 1 (MS1) and MS2) of the updated group status, i.e., that a participant left.

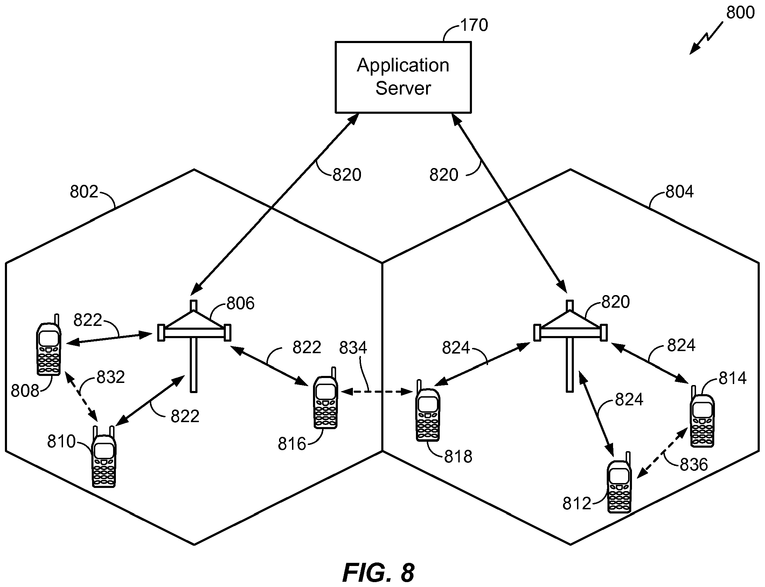

In contrast to FIGS. 5-7, FIG. 8 illustrates a wireless communications system 800 in which UEs can connect directly to other UEs using D2D P2P technology (e.g., LTE-D, WiFi Direct, Bluetooth, etc.) while also connecting to a Wireless Wide Area Network (WWAN), such as an LTE network. Referring to FIG. 8, the application server 170 is connected to a first cell 802 having a first base station 806, a second cell 804 having a second base station 820. The application server 170 is coupled to the first base stations 806 and the second base station 820 via a network link 820. The coverage area of a given base station is represented by the cell in which the given base station is located. In the example of FIG. 8, the first cell 802 includes the coverage area corresponding to the first base station 806 and the second cell 804 includes the coverage area corresponding to the second base station 820.

Each of cells 802, 804 in the wireless communications system 800 include various UEs that communicate with the respective base stations 806, 820 and with the application server 170 via the respective base stations 806, 820. For example, in FIG. 8, the first cell 802 includes UE 808, UE 810, and UE 816, while the second cell 804 includes UE 812, UE 814, and UE 818. Each of these UEs may correspond to a UE such as UEs 200A or 200B illustrated in FIG. 2. Although not shown in FIG. 8, in some embodiments the base stations 806, 820 may be connected to one another via a backhaul link.

One or more of UE 808, UE 810, UE 816, UE 812, UE 814, and UE 818 may support direct (or D2D) P2P communications. Such UEs may support communicating with one another directly without communicating through another device or a network infrastructure element, such as the first base station 806 or the second base station 820, and may also support communications through network infrastructure elements, such as the first base station 806 and/or the second base station 820. In communications that involve network infrastructure, signals may generally be transmitted and received through uplink and downlink connections between the UEs and the base stations 806, 820, such as link 822 in the first cell 802 and link 824 in the second cell 804. Each of the base stations 806, 820 generally serve as the attachment point for the UEs in the corresponding cells 802, 804 and facilitate communications between the UEs served therein. When two or more UEs, such as UE 808 and UE 810, wish to communicate with one another and are located in sufficient proximity to each other, then a direct P2P link can be established therebetween, which may offload traffic from the base station 806 serving the UEs 808, 810, allow UEs 808, 810 to communicate more efficiently, and provide other advantages that will be apparent to those skilled in the art.

As shown in FIG. 8, UE 812 can communicate with UE 814 through intermediate base station 820 via link 824, and UEs 812, 814 may further communicate via a P2P link 836. Furthermore, for inter-cell communications where the participating UEs are in different nearby cells, a direct P2P communications link is still a possibility, which is illustrated in FIG. 8 where UE 816 and UE 818 may communicate using direct P2P communications illustrated by dashed link 834.

The links 832, 834, and/or 836 illustrated in FIG. 8 may be LTE-D links, for example. LTE-D is a proposed 3GPP (Release 12) D2D solution for proximate discovery. LTE-D dispenses with location tracking and network calls by directly monitoring for services on other LTE-D devices within a large range (∼500m, line of sight). It does so continuously in a synchronous system that is battery efficient, and can concurrently detect thousands of services in proximity.

LTE-D operates on licensed spectrum as a service to mobile applications. LTE-D is a D2D solution that enables service layer discovery. Mobile applications on LTE-D devices can instruct LTE-D to monitor for mobile application services on other devices and announce their own services (for detection by services on other LTE-D devices) at the physical layer. This allows the applications to be closed while LTE-D does the work - continuously - and notify the client application when it detects a match to the monitor it set.

LTE-D is thus an attractive alternative to mobile developers seeking to deploy proximate discovery solutions as extensions of their existing cloud services. LTE-D is a distributed discovery solution (versus the centralized discovery that exists today), whereby mobile applications forego centralized database processing in identifying relevancy matches, instead autonomously determining relevance at the device level by transmitting and monitoring for relevant attributes. LTE-D offers certain benefits in terms of privacy as well as power consumption, in that LTE-D does not utilize perpetual location tracking to determine proximity. By keeping discovery on the device rather than in the cloud, the user has more control of what information is shared with external devices.

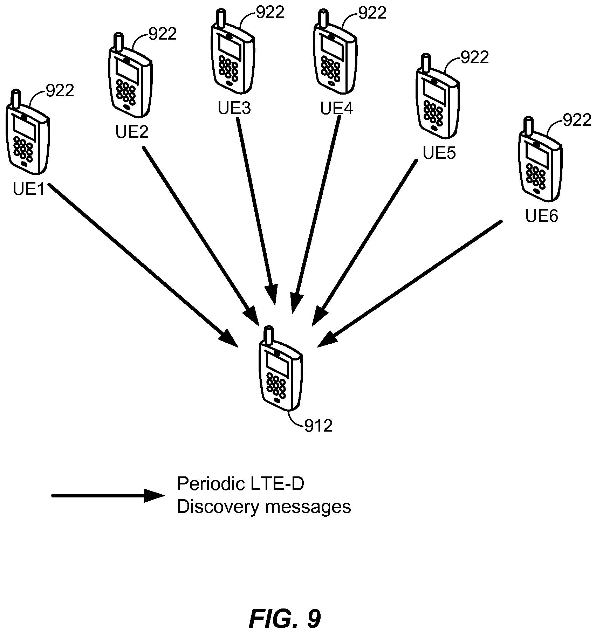

LTE-D proposes periodic P2P discovery messages that are transmitted by LTE-D capable devices and received and decoded by LTE-D capable devices. The LTE-D capable devices wakeup periodically and synchronously to discover all devices within range. Discovery in LTE-D operates in a synchronous manner based on parameters that are configured by the LTE network itself. For example, frequency division duplexing (FDD) and/or time division duplexing (TDD) may be assigned by a serving eNode B via a Session Information Block (SIB). The serving eNode B can also configure an interval at which LTE-D devices announce themselves (e.g., every 20 seconds, etc.) via transmission of a Service Discovery (or P2P Discovery) message. For example, for a 10 MHz FDD system, the eNode B can allocate 44 Physical Uplink Shared Channel (PUSCH) radio bearers (RBs) to be used for discovery in accordance with a discovery period that occurs every 20 seconds and includes 64 sub-frames, such that the number of direct discovery resources (DRIDs) is 44 x 64 = 2816. FIG. 9 illustrates an example in which LTE-D capable devices 922 transmit periodic LTE-D discovery messages to an LTE-D capable device 912.

Note that in some cases, after two or more LTE-D devices, such as UEs 816 and 818 in FIG. 8 or UE 912 and any of UEs 922, discover each other and wish to establish an LTE-D session for communication, the LTE network may be required to authorized establishment of the LTE-D session, referred to herein as network assisted connection setup. If the LTE network authorizes the LTE-D session, the actual media is exchanged via D2D between the LTE-D devices.

The periodic discovery messages transmitted between LTE-D capable devices contain LTE-D "Expressions." LTE-D relies on Expressions for both discovery of proximate peers and facilitating communication between proximate peers. Expressions at the application or service layer are referred to as "Expression Names" (e.g., ShirtSale@Gap.com, Jane@Facebook.com, etc.). Expression Names at the application layer are mapped to bit-strings at the physical layer that are referred to as "Expression Codes." In an example, each Expression Code can have a length of 128 bits (e.g., "11001111 ... 1011," etc.). As will be appreciated, any reference to a particular Expression can be used to refer to the Expression's associated Expression Name, Expression Code or both, depending upon the context. Expressions can be either Private or Public. Public Expressions are made public and can be identified by any application, whereby Private Expressions are targeted for specific audiences.

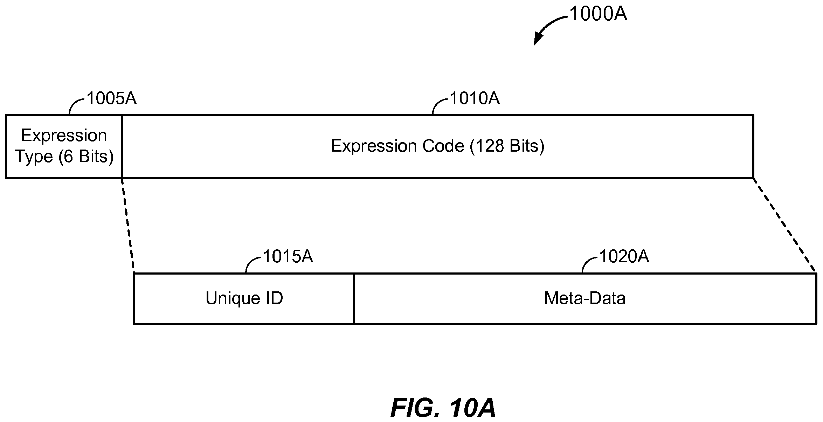

FIG. 10A illustrates an individual P2P discovery message (I_P2PDM) 1000A for LTE-D in accordance with an aspect of the disclosure. Referring to FIG. 10A, the I_P2PDM 1000A includes a 6-bit Expression Type Field 1005A and a 128-bit Expression Code Field 1010A. The 128-bit Expression Code Field 1010A includes a Unique Group Identifier 1015A for a particular P2P group and one or more "metadata" fields 1020A. The metadata fields 1020A can include various types of data, such as presence information (e.g., "Busy," "Available for Voice Communication," "Available for Text Communication," etc.), and so on. LTE-D aware applications/middleware deciphers the LTE-D Expression based on the Type and Content of the message.

Each P2P group member for each of a set of groups may be configured to periodically transmit an I_P2PDM at a given interval. For example, in LTE-D, the interval can be 20 seconds. Each I_P2PDM individually identifies the P2P group member that transmits the I_P2PDM. For example, in LTE-D, the I_P2PDM can include the Private or Public Expression for the associated P2P group member.

According to an aspect of the disclosure, the periodic LTE-D discovery messages can be utilized to convey the current activity of a particular P2P communications group. Specifically, the LTE-D Expressions (or alternatively the Service Discovery messages) can convey the group activity associated with the P2P communications group (e.g., a PTT group, a video conferencing group, a group voice call, etc.). As used herein, the terms "discovery message" and "Expression" may be used interchangeably.

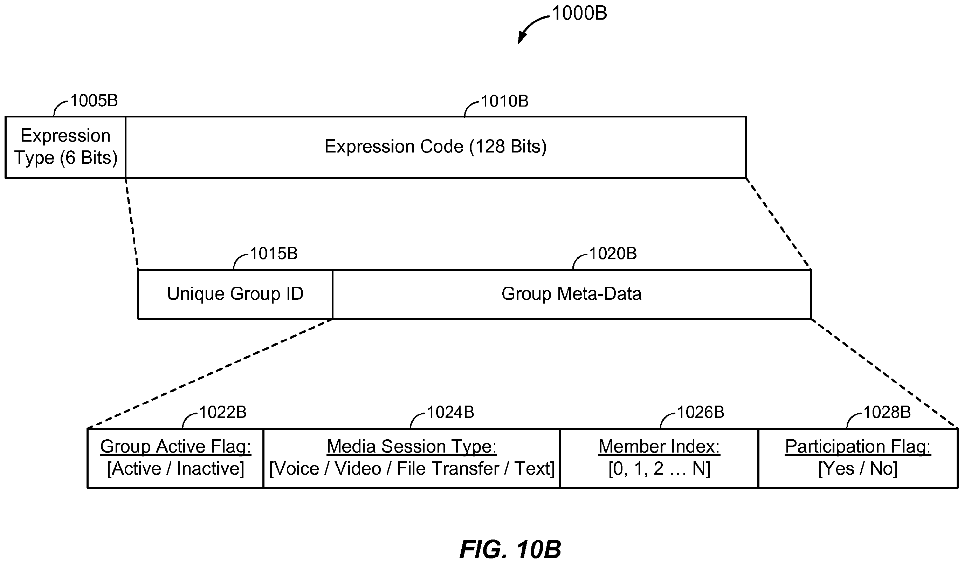

FIG. 10B illustrates an I_P2PDM 1000B for LTE-D in accordance with an aspect of the disclosure. As in FIG. 10A, the I_P2PDM 1000B in FIG. 10B includes a 6-bit Expression Type Field 1005B and a 128-bit Expression Code Field 1010B. The 128-bit Expression Code Field 1010B includes a Unique Group Identifier 1015B for a particular P2P group and one or more metadata fields 1020B.

In contrast to FIG. 10A, however, the metadata fields 1020B can include a Group Active Flag 1022B, a Media Session Type field 1024B, a Member Index field 1026B, and a Participation Flag 1028B. The Group Active Flag 1022B may be a single bit, where a value of "1" indicates that the group is active and a value of "0" indicates that the group is inactive. The Media Session Type field 1024B may have a value of "Voice," "Video," "File Transfer," "Text," or the like. The Member Index field 1026B and the Participation Flag 1028B may be repeated for every member of the P2P group. The Member Index field 1026B may include a unique identifier for a member, and the Participation Flag 1028B may be a one-bit field indicating whether or not that member is participating in the group communication.

The Expression containing the group activity information can be transmitted by any member(s) of the P2P group, irrespective of whether that member is active in the group media session or not. A UE that is not active in the P2P group (and possibly does not know that the group is active) may deduce that the group is inactive if discovery messages pertaining to that group have the Group Active Flag 1022B set to "0," or that the group is active if at least two members of the group convey that the group is active in the discovery messages. That is, if at least two members of the P2P group are communicating with each other, they set the Group Active Flag 1022B to "1" in the discovery messages 1000B that they periodically broadcast.

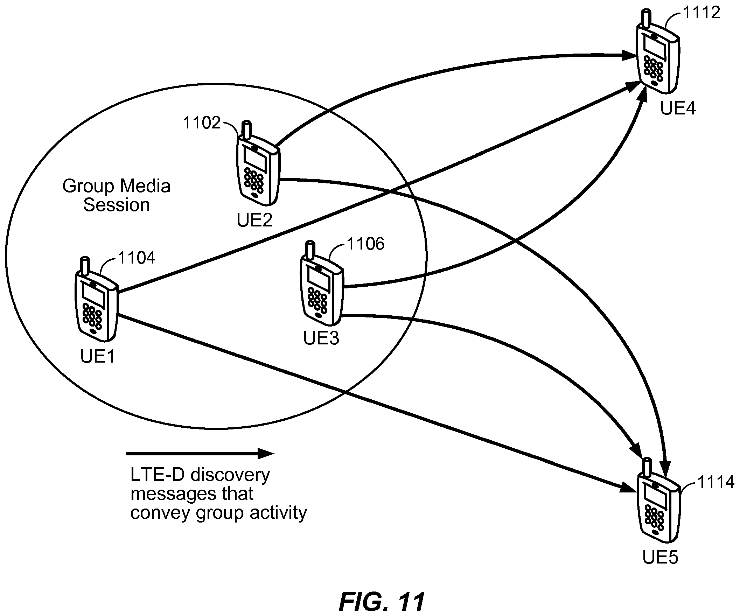

FIG. 11 illustrates an exemplary communications group of LTE-D capable UEs 1102, 1104, 1106, 1112, 1114 transmitting discovery messages according to an aspect of the disclosure. As illustrated in FIG. 11, UEs 1102, 1104, 1106 are participating in a group media session and UEs 1112, 1114 are not. UEs 1112, 114 are notified about the group activity via LTE-D discovery messages, such as the I_P2PDM 1000B illustrated in FIG. 10B. Based on the received discovery messages, UEs 1112, 1114 know which members are or are not participating in the group media session (based on the member index field 1026B and the participation flag 1028B), and whether or not the group media session is active or inactive (based on the group active flag 1022B). If the group media session is active, as in FIG. 11, the UEs 1112, 1114 know what type of media activity is currently active, such as voice, video, text, etc. (based on the media session type field 1024B).

More specifically, each UE 1102 - 1114 knows its participation status and broadcasts that information to the other UEs via the participation flag 1028B. The receiving UEs know which member(s) is/are active or not active based on the member index value 1026B. The group activity indication (i.e., the group active flag 1022B) may be set in the discovery messages 1000B by UEs that are active in the group (e.g., UEs 1102 - 1106 in FIG. 11). Non-participating UEs (e.g., UEs 1112, 1114 in FIG. 11) do not know whether the group is active or what media type is associated with the group, and therefore assume that the group is not active. A non-participating UE receiving multiple discovery messages may determine whether the group is active if it receives a threshold number of discovery messages that indicate that the group is active.

While FIG. 11 illustrates that only the participating UEs (i.e., UEs 1102, 1104, 1106) broadcast LTE-D discovery messages, all of UEs 1102, 1104, 1106, 1112, 1114 may broadcast the discovery message illustrated in FIG. 10B. Since all UEs in a communications group may send such discovery messages, there may be duplicate discovery messages received at a particular UE. Accordingly, when duplicate messages are received, the recipient UE can filter those messages before passing group status messages to the UI.

Alternatively, rather than each UE periodically broadcasting the LTE-D discovery messages illustrated in FIG. 10B, one or more group members may be assigned the task of periodically transmitting the group activity discovery messages 1000B for the group. Each UE would still periodically broadcast I_P2PDMs, and the designated group member(s) would compile the information into the discovery message illustrated in FIG. 10B. Having less than all of the group members transmit the group discovery messages can reduce interference and improve battery life in scenarios where a high number of proximate P2P group members are present.

In an aspect, for privacy reasons, when the group is active (e.g., the Group Active Flag 1022B is set to "1"), the Member Indices 1026B can be excluded so that no information about the members' participation is disclosed.

Additionally, where there are multiple P2P communications groups in proximity to each other broadcasting P2P discovery messages, the UEs in each group can ignore discovery messages from the other group based on, for example, the Unique Group ID 1015B. The discovery messages can be ignored/discarded at the application layer.

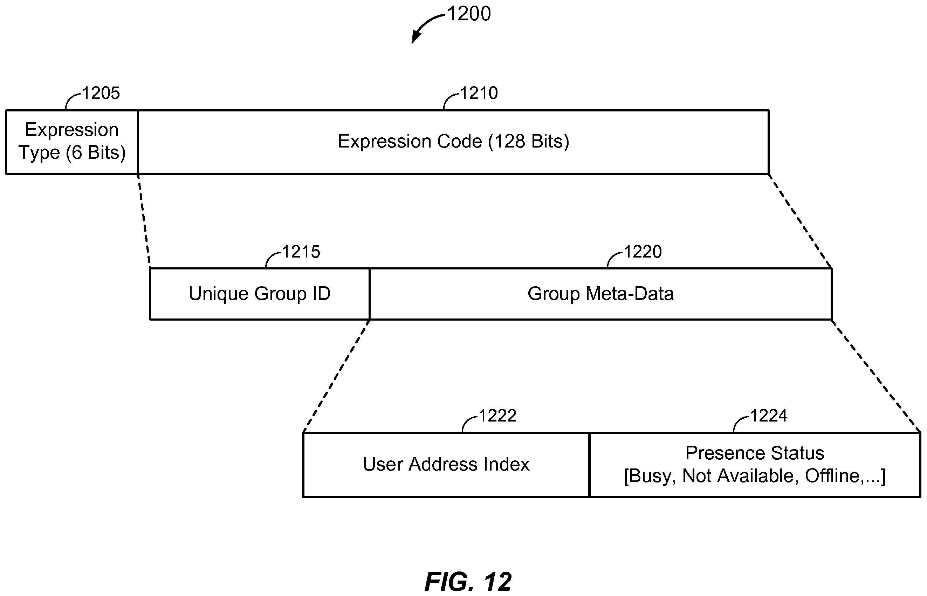

The P2P discovery message illustrated in FIG. 10A can also be leveraged to convey a user's presence status information. FIG. 12 illustrates an exemplary I_P2PDM 1200 for LTE-D in accordance with an aspect of the disclosure. As in FIGS. 10A and 10B, the I P2PDM 1200 in FIG. 12 includes a 6-bit Expression Type Field 1205 and a 128-bit Expression Code Field 1210. The 128-bit Expression Code Field 1210 includes a Unique Group Identifier 1215 for a particular P2P group and one or more metadata fields 1220.

In contrast to FIGS. 10A and 10B, however, the metadata field 1220 includes a User Address Index field 1222 and a Presence Status field 1224. The User Address Index field 1222 conveys user or participant information, and the Presence Status field 1224 indicates the presence of the user, such as "Busy," "Not Available," "Offline," etc.

There are a number of benefits to broadcasting group activity information and presence information in P2P discovery messages: It leverages the P2P framework to send group activity information, it does not encumber the application server(s), which typically requires a subscribe / notify mechanism that adds to the overhead, it does not impact access networks (such as IMS, cellular infrastructure, etc.), and it is a lightweight and extensible framework.

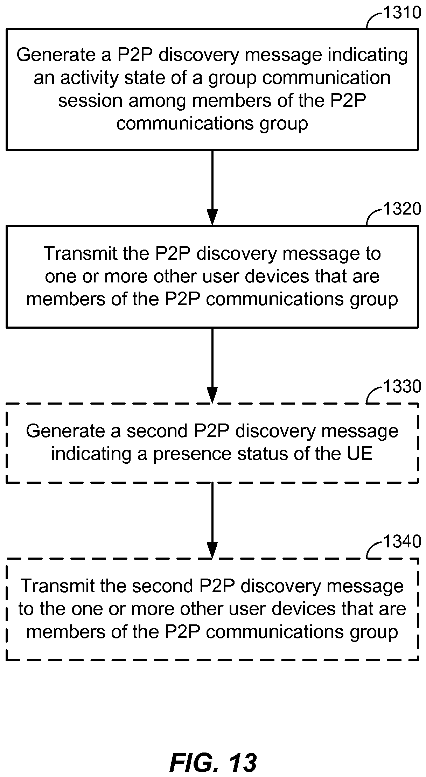

FIG. 13 illustrates an exemplary flow for leveraging P2P discovery messages according to an aspect of the disclosure. The flow illustrated in FIG. 13 may be performed by a UE that is a member of a P2P communications group and is capable of broadcasting P2P discovery messages as described herein, such as any of the UEs illustrated in FIGS. 8, 9, and 11. The UE may or may not be participating in the group communication session when it performs the flow illustrated in FIG. 13.

At 1310, the UE generates a P2P discovery message that indicates an activity state of a group communication session among members of the P2P communications group. The activity state may include a flag indicating that the group communication session is active or inactive, a type of media activity of the group communication session, a list of each member of the P2P communications group, and/or a participation flag of each member of the P2P communications group, as described above with reference to FIG. 10B. The type of media activity may be one of voice, video, text, or file transfer. The P2P discovery message may be an LTE-D or a WiFi Direct discovery message, such as the discovery message illustrated in FIG. 10B.

As discussed above, for privacy reasons, the activity state may or may not include a list of members of the P2P communications group participating in the group communication session in, for example, the Member Index field 1026B and the Participation Flag 1028B.

At 1320, the UE transmits the P2P discovery message to one or more other UEs that are members of the P2P communications group. The one or more other UEs may or may not be participating in the group communication session. At least one of the one or more other UEs may decide to join the group communication session based on receiving the P2P discovery message.

As discussed above, each member of the P2P communications group may periodically broadcast P2P discovery messages indicating the activity state of the group communication session. In that case, the UE can ignore duplicate P2P discovery messages. Alternatively, only a group organizer of the P2P communications group may transmit P2P discovery messages indicating an activity state of the group communication session. Additionally, the UE may ignore P2P discovery messages related to a group communication session to which the UE does not belong.

At 1330, the UE may optionally generate a second P2P discovery message that indicates a presence status of the UE, such as the discovery message illustrated in FIG. 12. At 1340, the UE optionally transmits the second P2P discovery message to the one or more other UEs that are members of the P2P communications group.

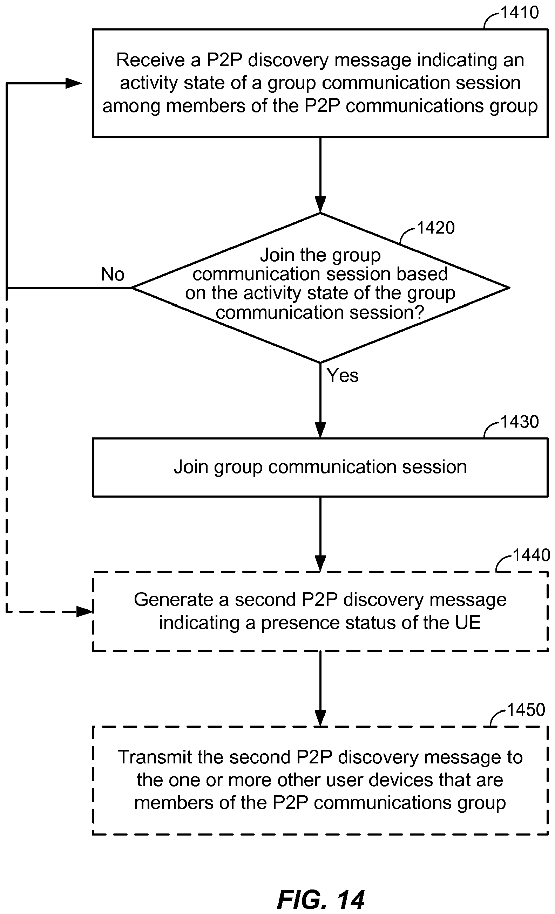

FIG. 14 illustrates an exemplary flow for leveraging P2P discovery messages according to an aspect of the disclosure. The flow illustrated in FIG. 14 may be performed by a UE that is a member of a P2P communications group and is capable of broadcasting and receiving P2P discovery messages as described herein, such as any of the UEs illustrated in FIGS. 8, 9, and 11. The flow illustrated in FIG. 14 may be performed by the same UE performing the flow illustrated in FIG. 13, or may be performed by another UE in the P2P communications group to which the UE performing the flow of FIG. 13 belongs.

At 1410, the UE receives a P2P discovery message indicating an activity state of a group communication session among members of the P2P communications group. The P2P discovery message may be an LTE-D or a WiFi Direct discovery message, such as the discovery message illustrated in FIG. 10B. The activity state may include a flag indicating that the group communication session is active or inactive, a type of media activity of the group communication session, a list of each member of the P2P communications group, and/or a participation flag of each member of the P2P communications group, as described above with reference to FIG. 10B. The type of media activity may be one of voice, video, text, or file transfer.

As discussed above, for privacy reasons, the activity state may or may not include a list of members of the P2P communications group participating in the group communication session in, for example, the Member Index field 1026B and the Participation Flag 1028B.

At 1420, the UE determines whether or not to join the group communication session based on the activity state of the group communication session. If the UE determines to join the group communication session, the flow proceeds to 1430, where the UE joins the group communication session. However, if the UE decides not to join the group communication session, the flow returns to 1410, where the UE will again receive a periodic P2P discovery message for the P2P communications group.

Although not illustrated in FIG. 14, the decision at 1420 may include displaying the activity state of the group communication session on a user interface of the UE and receiving user input indicating whether or not to join the group communication session in response to the displaying. Alternatively, the decision at 1420 may include comparing the activity state of the group communication session to one or more rules and joining the group communication session based on the comparison. In this case, the one or more rules may have been determined based on user input.

Regardless of the outcome of the decision at 1420, at 1440, the UE may optionally generate a second P2P discovery message that indicates a presence status of the UE, such as the discovery message illustrated in FIG. 12. At 1450, the UE optionally transmits the second P2P discovery message to the one or more other UEs that are members of the P2P communications group.

As discussed above, each member of the P2P communications group may periodically broadcast P2P discovery messages indicating the activity state of the group communication session. In that case, the UE can ignore duplicate P2P discovery messages. Alternatively, only a group organizer of the P2P communications group may transmit P2P discovery messages indicating an activity state of the group communication session. Additionally, the UE may ignore P2P discovery messages related to a group communication session to which the UE does not belong.

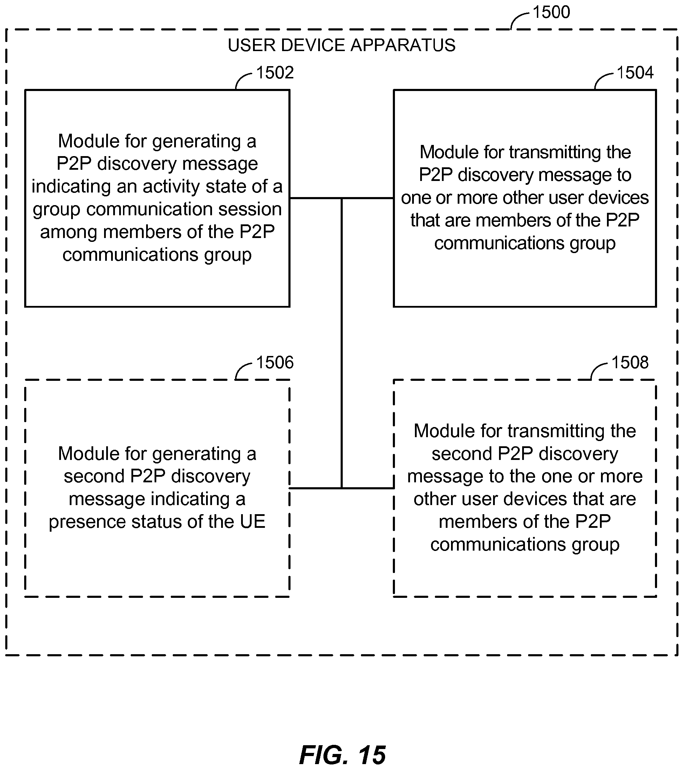

FIG. 15 illustrates an example user device apparatus 1500 represented as a series of interrelated functional modules. The user device apparatus 1500 may correspond to a UE that is a member of a P2P communications group and is capable of broadcasting and receiving P2P discovery messages as described herein, such as any of the UEs illustrated in FIGS. 8, 9, and 11. A module for generating a P2P discovery message 1502 may correspond at least in some aspects to, for example, a processing system, such as ASIC 208 in FIG. 2, as discussed herein. A module for transmitting a P2P discovery message 1504 may correspond at least in some aspects to, for example, a transceiver, such as transceiver 206 in FIG. 2, as discussed herein. An optional module for generating a second P2P discovery message 1506 may correspond at least in some aspects to, for example, a processing system, such as ASIC 208 in FIG. 2, as discussed herein. An optional module for transmitting the second P2P discovery message 1508 may correspond at least in some aspects to, for example, a transceiver, such as transceiver 206 in FIG. 2, as discussed herein.

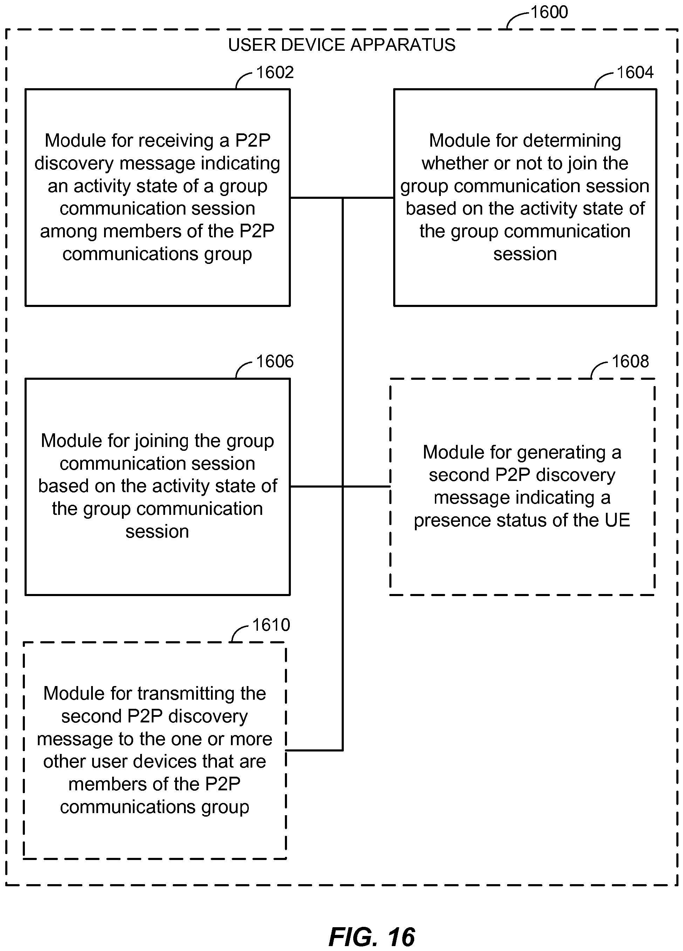

FIG. 16 illustrates an example user device apparatus 1600 represented as a series of interrelated functional modules. The user device apparatus 1600 may correspond to a UE that is a member of a P2P communications group and is capable of broadcasting and receiving P2P discovery messages as described herein, such as any of the UEs illustrated in FIGS. 8, 9, and 11. The user device apparatus 1600 may be the same user device apparatus 1500 illustrated in FIG. 15, or may correspond to another user device apparatus in the P2P communications group to which the user device apparatus illustrated in FIG. 13 belongs. A module for receiving a P2P discovery message 1402 may correspond at least in some aspects to, for example, a transceiver, such as transceiver 206 in FIG. 2, as discussed herein. A module for determining 1404 may correspond at least in some aspects to, for example, a processing system, such as ASIC 208 in FIG. 2, as discussed herein. A module for joining 1406 may correspond at least in some aspects to, for example, a processing system in cooperation with a transmitter, such as ASIC 208 and transceiver 206 in FIG. 2, as discussed herein. An optional module for generating a second P2P discovery message 1608 may correspond at least in some aspects to, for example, a processing system, such as ASIC 208 in FIG. 2, as discussed herein. An optional module for transmitting the second P2P discovery message 1610 may correspond at least in some aspects to, for example, a transceiver, such as transceiver 206 in FIG. 2, as discussed herein.

The functionality of the modules of FIGS. 15 - 16 may be implemented in various ways consistent with the teachings herein. In some designs, the functionality of these modules may be implemented as one or more electrical components. In some designs, the functionality of these blocks may be implemented as a processing system including one or more processor components. In some designs, the functionality of these modules may be implemented using, for example, at least a portion of one or more integrated circuits (e.g., an ASIC). As discussed herein, an integrated circuit may include a processor, software, other related components, or some combination thereof. Thus, the functionality of different modules may be implemented, for example, as different subsets of an integrated circuit, as different subsets of a set of software modules, or a combination thereof. Also, it will be appreciated that a given subset (e.g., of an integrated circuit and/or of a set of software modules) may provide at least a portion of the functionality for more than one module.

In addition, the components and functions represented by FIGS. 15 - 16, as well as other components and functions described herein, may be implemented using any suitable means. Such means also may be implemented, at least in part, using corresponding structure as taught herein. For example, the components described above in conjunction with the "module for" components of FIGS. 15 - 16 also may correspond to similarly designated "means for" functionality. Thus, in some aspects one or more of such means may be implemented using one or more of processor components, integrated circuits, or other suitable structure as taught herein.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the disclosure, it should be noted that various changes and modifications could be made herein without departing from the scope of the disclosure as defined by the appended claims. The functions, steps and/or actions of the method claims in accordance with the embodiments of the disclosure described herein need not be performed in any particular order. Furthermore, although elements of the disclosure may be described or claimed in the singular, the plural is contemplated unless limitation to the singular is explicitly stated.

## Claims

1. A method for leveraging peer-to-peer, P2P,discovery messages, comprising:
generating, by a user device that is a member of a P2P communications group having a plurality of members, a P2P discovery message, the P2P discovery message indicating an activity state of a group communication session among two or more of the plurality of members of the P2P communications group; and
transmitting, by the user device, the P2P discovery message to one or more other user devices that are members of the P2P communications group.

2. The method of claim 1, wherein the one or more other user devices are not participating in the group communication session and optionally
wherein at least one of the one or more other user devices decides to join the group communication session based on receiving the P2P discovery message.

3. The method of claim 1, further comprising:
generating a second P2P discovery message, the second P2P discovery message indicating a presence status of the user device; and
transmitting, by the user device, the second P2P discovery message to the one or more other user devices that are members of the P2P communications group.

4. A method for leveraging peer-to-peer, P2P discovery messages, comprising:
receiving, by a user device that is a member of a P2P communications group, having a plurality of members, a P2P discovery message indicating an activity state of a group communication session among two or more of the plurality of members of the P2P communications group; and
determining, by the user device, whether or not to join the group communication session based on the activity state of the group communication session.

5. The method of claim 4, wherein the determining comprises:
displaying the activity state of the group communication session on a user interface of the user device; and
receiving user input indicating whether or not to join the group communication session in response to the displaying.

6. The method of claim 4, wherein the determining comprises:
comparing the activity state of the group communication session to one or more rules; and
joining the group communication session based on the comparison and optionally wherein the one or more rules are determined based on user input.

7. The method of claim 1 or claim 4, wherein the activity state comprises a flag indicating that the group communication session is active or inactive, a type of media activity of the group communication session, a list of each member of the P2P communications group, and/or a participation flag of each member of the P2P communications group and optionally wherein the type of media activity comprises one of voice, video, text, or file transfer.

8. The method of claim 1 or 4, wherein the activity state comprises a list of the members of the P2P communications group participating in the group communication session.

9. The method of claim 1 or claim 4, wherein the activity state does not include a list of the members of the P2P communications group participating in the group communication session.

10. The method of claim 1 or claim 4, wherein each member of the P2P communications group periodically broadcasts P2P discovery messages indicating an activity state of the group communication session.

11. The method of claim 10, wherein the user device ignores duplicate P2P discovery messages indicating an activity state of the group communication session.

12. The method of claim 1 or claim4, wherein only a group organizer of the P2P communications group transmits P2P discovery messages indicating an activity state of the group communication session.

13. The method of claim 1 or claim 4, further comprising:
ignoring P2P discovery messages related to a group communication session to which the user device does not belong.

14. The method of claim 1 or claim 4, wherein the P2P discovery message comprises a Long Term Evolution Direct, LTE-D)or a WiFi Direct discovery message.

15. A user device for leveraging peer-to-peer, P2P discovery messages, comprising:
a processor configured to generate a P2P discovery message, the P2P discovery message indicating an activity state of a group communication session among two or more members of a P2P communications group having a plurality of members, wherein the user device is a member of the P2P communications group; and
a transceiver configured to transmit the P2P discovery message to one or more other user devices that are members of the P2P communications group.

16. A user device for leveraging peer-to-peer, P2P discovery messages, comprising:
a transceiver configured to receive a P2P discovery message indicating an activity state of a group communication session among two or more members of a P2P communications group having a plurality of members, wherein the user device is a member of the P2P communications group; and
a processor configured to determine whether or not to join the group communication session based on the activity state of the group communication session.

## Patentansprüche

1. Verfahren zum wirksamen Einsetzen von Peer-to-Peer-, P2P, Discovery-Nachrichten, welches Folgendes aufweist:
Erzeugen einer P2P-Ermittlungs- bzw. P2P-Discovery-Nachricht durch eine Nutzereinrichtung, die ein Mitglied einer P2P-Kommunikationsgruppe mit einer Vielzahl von Mitgliedern ist, wobei die P2P-Discovery-Nachricht einen Aktivitätszustand einer Gruppenkommunikationssitzung zwischen zwei oder mehr der Vielzahl von Mitgliedern der P2P-Kommunikationsgruppe anzeigt; und
Senden der P2P-Discovery-Nachricht an eine oder mehrere andere Nutzereinrichtungen, die Mitglieder der P2P-Kommunikationsgruppe sind, durch die Nutzereinrichtung.

2. Verfahren nach Anspruch 1, wobei die eine oder die mehreren anderen Nutzereinrichtungen nicht an der Gruppenkommunikationssitzung teilnehmen, und wobei optional zumindest eine der einen oder der mehreren anderen Nutzereinrichtungen entscheidet, der Gruppenkommunikationssitzung beizutreten, und zwar basierend auf dem Empfang der P2P-Discovery-Nachricht.

3. Verfahren nach Anspruch 1, welches weiter Folgendes aufweist:
Erzeugen einer zweiten P2P-Discovery-Nachricht, wobei die zweite P2P-Discovery-Nachricht einen Präsenszustand der Nutzereinrichtung anzeigt; und
Senden der zweiten P2P-Discovery-Nachricht an die eine oder die mehreren anderen Nutzereinrichtungen, die Mitglieder der P2P-Kommunikationsgruppe sind, durch die Nutzereinrichtung.

4. Verfahren zum wirksamen Einsetzen von Peer-to-Peer- bzw. P2P-Discovery-Nachrichten, welches Folgendes aufweist:
Empfangen, und zwar durch eine Nutzereinrichtung, die Mitglied einer P2P-Kommunikationsgruppe ist, die eine Vielzahl von Mitgliedern hat, einer P2P-Ermittlungs- bzw. P2P-Discovery-Nachricht, die einen Aktivitätszustand einer Gruppenkommunikationssitzung zwischen zwei oder mehr der Vielzahl von Mitgliedern der P2P-Kommunikationsgruppe anzeigt; und
Bestimmen, und zwar durch die Nutzereinrichtung, ob der Gruppenkommunikationssitzung beigetreten werden soll oder nicht, und zwar basierend auf dem Aktivitätszustand der Gruppenkommunikationssitzung.

5. Verfahren nach Anspruch 4, wobei das Bestimmen Folgendes aufweist:
Anzeigen des Aktivitätszustandes der Gruppenkommunikationssitzung auf einer Nutzerschnittstelle der Nutzereinrichtung; und
Empfangen einer Nutzereingabe, die anzeigt, ob der Gruppenkommunikationssitzung beigetreten werden soll oder nicht, und zwar ansprechend auf das Anzeigen.

6. Verfahren nach Anspruch 4, wobei das Bestimmen Folgendes aufweist:
Vergleichen des Aktivitätszustandes der Gruppenkommunikationssitzung mit einer oder mehreren Regeln; und
Beitreten der Gruppenkommunikationssitzung basierend auf dem Vergleich und wobei optional die einen oder mehreren Regeln auf einer Nutzereingabe basierend bestimmt werden.

7. Verfahren nach Anspruch 1 oder Anspruch 4, wobei das Bestimmen des Aktivitätszustandes Folgendes aufweist: ein Flag, welches anzeigt, dass die Gruppenkommunikationssitzung aktiv oder inaktiv ist, einen Typ einer Medienaktivität der Gruppenkommunikationssitzung, eine Liste von jedem Mitglied der P2P-Kommunikationsgruppe und/oder ein Partizipations- bzw. Teilnahme-Flag von jedem Mitglied der P2P-Kommunikationsgruppe, und wobei optional der Typ der Medienaktivität eines von Folgenden aufweist:
Sprache, Video, Text oder Dateiübertragung.

8. Verfahren nach Anspruch 1 oder Anspruch 4, wobei der Aktivitätszustand eine Liste der Mitglieder der P2P-Kommunikationsgruppe aufweist, die an der Gruppenkommunikationssitzung teilnehmen.

9. Verfahren nach Anspruch 1 oder Anspruch 4, wobei der Aktivitätszustand keine Liste der Mitglieder der P2P-Kommunikationsgruppe aufweist, die an der Gruppenkommunikationssitzung teilnehmen.

10. Verfahren nach Anspruch 1 oder Anspruch 4, wobei jedes Mitglied der P2P-Kommunikationsgruppe periodisch P2P-Ermittlungs- bzw. P2P-Discovery-Nachrichten aussendet, die einen Aktivitätszustand der Gruppenkommunikationssitzung anzeigen.

11. Verfahren nach Anspruch 10, wobei die Nutzereinrichtung doppelte P2P-Discovery-Nachrichten ignoriert, welche einen Aktivitätszustand der Gruppenkommunikationssitzung anzeigen.

12. Verfahren nach Anspruch 1 oder Anspruch 4, wobei nur ein Gruppenorganisator der P2P-Kommunikationsgruppe P2P-Discovery-Nachrichten sendet, die einen Aktivitätszustand der Gruppenkommunikationssitzung anzeigen.

13. Verfahren nach Anspruch 1 oder Anspruch 4, welches weiter Folgendes aufweist:
Ignorieren von P2P-Discovery-Nachrichten, die sich auf eine Gruppenkommunikationssitzung beziehen, zu der die Nutzereinrichtung nicht gehört.

14. Verfahren nach Anspruch 1 oder Anspruch 4, wobei die P2P-Discovery-Nachricht eine Long Term Evolution Direct- LTE-D-Discovery-Nachricht oder eine WiFi-Direct-Discovery-Nachricht aufweist.

15. Nutzereinrichtung zum wirksamen Einsetzen von Peer-to-Peer- bzw. P2P-Discovery-Nachrichten, die Folgendes aufweist:
einen Prozessor, der konfiguriert ist, um eine P2P-Ermittlungs- bzw. P2P-Discovery-Nachricht zu erzeugen, wobei die P2P-Discovery-Nachricht einen Aktivitätszustand einer Gruppenkommunikationssitzung zwischen zwei oder mehr Mitgliedern einer P2P-Kommunikationsgruppe mit einer Vielzahl von Mitgliedern anzeigt, wobei die Nutzereinrichtung ein Mitglied der P2P-Kommunikationsgruppe ist; und
einen Transceiver bzw. Sender/Empfänger, der konfiguriert ist, um die P2P-Discovery-Nachricht an eine oder mehrere andere Nutzereinrichtungen zu senden, die Mitglieder der P2P-Kommunikationsgruppe sind.

16. Nutzereinrichtung zum wirksamen Einsetzen von Peer-to-Peer- bzw. P2P-Discovery-Nachrichten, die Folgendes aufweist:
einen Transceiver bzw. Sender/Empfänger, der konfiguriert ist, um eine P2P-Discovery-Nachricht zu empfangen, die einen Aktivitätszustand einer Gruppenkommunikationssitzung unter zwei oder mehr Mitgliedern einer P2P-Kommunikationsgruppe anzeigt, die eine Vielzahl von Mitgliedern hat, wobei die Nutzereinrichtung ein Mitglied der P2P-Kommunikationsgruppe ist; und
einen Prozessor, der konfiguriert ist, um zu bestimmen, ob der Gruppenkommunikationssitzung beigetreten werden soll oder nicht, und zwar basierend auf dem Aktivitätszustand der Gruppenkommunikationssitzung.

## Revendications

1. Procédé pour tirer parti de messages de découverte «pair-à-pair», P2P, comprenant les étapes ci-dessous consistant à :
générer, par le biais d'un dispositif d'utilisateur qui est un membre d'un groupe de communication P2P présentant une pluralité de membres, un message de découverte P2P, le message de découverte P2P indiquant un état d'activité d'une session de communication de groupe parmi deux membres ou plus de la pluralité de membres du groupe de communication P2P ; et
transmettre, par le biais du dispositif d'utilisateur, le message de découverte P2P, à un ou plusieurs autres dispositifs d'utilisateur qui sont des membres du groupe de communication P2P.

2. Procédé selon la revendication 1, dans lequel ledit un ou lesdits plusieurs autres dispositifs d'utilisateur ne prennent pas part à la session de communication de groupe et, facultativement, dans lequel au moins un dispositif dudit un ou desdits plusieurs autres dispositifs d'utilisateur décide de se joindre à la session de communication de groupe sur la base de la réception du message de découverte P2P.

3. Procédé selon la revendication 1, comprenant en outre les étapes ci-dessous consistant à :
générer un second message de découverte P2P, le second message de découverte P2P indiquant un état de présence du dispositif d'utilisateur ; et
transmettre, par le biais du dispositif d'utilisateur, le second message de découverte P2P, audit un ou auxdits plusieurs autres dispositifs d'utilisateur qui sont des membres du groupe de communication P2P.

4. Procédé pour tirer parti de messages de découverte « pair-à-pair », P2P, comprenant les étapes ci-dessous consistant à :
recevoir, par le biais d'un dispositif d'utilisateur qui est un membre d'un groupe de communication P2P, présentant une pluralité de membres, un message de découverte P2P indiquant un état d'activité d'une session de communication de groupe parmi deux membres ou plus de la pluralité de membres du groupe de communication P2P ; et
déterminer, par le biais du dispositif d'utilisateur, s'il convient de se joindre ou non à la session de communication de groupe sur la base de l'état d'activité de la session de communication de groupe.

5. Procédé selon la revendication 4, dans lequel l'étape de détermination comprend les étapes ci-dessous consistant à :
afficher l'état d'activité de la session de communication de groupe sur une interface utilisateur du dispositif d'utilisateur ; et
recevoir une entrée d'utilisateur indiquant s'il convient de se joindre ou non à la session de communication de groupe en réponse à l'étape d'affichage.

6. Procédé selon la revendication 4, dans lequel l'étape de détermination comprend les étapes ci-dessous consistant à :
comparer l'état d'activité de la session de communication de groupe à une ou plusieurs règles ; et
se joindre à la session de communication de groupe sur la base de la comparaison et, facultativement, dans lequel ladite une ou lesdites plusieurs règles sont déterminées sur la base de l'entrée d'utilisateur.

7. Procédé selon la revendication 1 ou 4, dans lequel l'état d'activité comprend un drapeau indiquant que la session de communication de groupe est active ou inactive, un type d'activité multimédia de la session de communication de groupe, une liste de chaque membre du groupe de communication P2P, et/ou un drapeau de participation de chaque membre du groupe de communication P2P, et facultativement dans lequel le type d'activité multimédia comprend l'un parmi un transfert de voix, de vidéo, de texte ou de fichier.

8. Procédé selon la revendication 1 ou 4, dans lequel l'état d'activité inclut une liste des membres du groupe de communication P2P participant à la session de communication de groupe.

9. Procédé selon la revendication 1 ou 4, dans lequel l'état d'activité n'inclut pas de liste des membres du groupe de communication P2P participant à la session de communication de groupe.

10. Procédé selon la revendication 1 ou 4, dans lequel chaque membre du groupe de communication P2P diffuse périodiquement des messages de découverte P2P indiquant un état d'activité de la session de communication de groupe.

11. Procédé selon la revendication 10, dans lequel le dispositif d'utilisateur ignore des messages de découverte P2P dupliqués indiquant un état d'activité de la session de communication de groupe.

12. Procédé selon la revendication 1 ou 4, dans lequel seul un organisateur de groupe du groupe de communication P2P transmet des messages de découverte P2P indiquant un état d'activité de la session de communication de groupe.

13. Procédé selon la revendication 1 ou 4, comprenant en outre l'étape ci-dessous consistant à :
ignorer des messages de découverte P2P connexes à une session de communication de groupe à laquelle le dispositif d'utilisateur n'appartient pas.

14. Procédé selon la revendication 1 ou 4, dans lequel le message de découverte P2P comprend un message de découverte de technologie d'évolution à long terme direct, LTE-D, ou un message de découverte WiFi Direct.

15. Dispositif d'utilisateur destiné à tirer parti de messages de découverte « pair-à-pair », P2P, comprenant :
un processeur configuré de manière à générer un message de découverte P2P, le message de découverte P2P indiquant un état d'activité d'une session de communication de groupe parmi deux membres ou plus d'un groupe de communication P2P présentant une pluralité de membres, dans lequel le dispositif d'utilisateur est un membre du groupe de communication P2P ; et
un émetteur-récepteur configuré de manière à transmettre le message de découverte P2P à un ou plusieurs autres dispositifs d'utilisateur qui sont des membres du groupe de communication P2P.

16. Dispositif d'utilisateur destiné à tirer parti de messages de découverte « pair-à-pair », P2P, comprenant :
un émetteur-récepteur configuré de manière à recevoir un message de découverte P2P indiquant un état d'activité d'une session de communication de groupe parmi deux membres ou plus d'un groupe de communication P2P présentant une pluralité de membres, dans lequel le dispositif d'utilisateur est un membre du groupe de communication P2P ; et
un processeur configuré de manière à déterminer s'il convient de se joindre ou non à la session de communication de groupe sur la base l'état d'activité de la session de communication de groupe.
